**Europäisches Patentamt**

**European Patent Office**

**Office européen des brevets**

(19)

(11) Veröffentlichungsnummer : **0 026 278**
**B1**

(12) **EUROPÄISCHE PATENTSCHRIFT**

(45) Veröffentlichungstag der Patentschrift : **16.02.83**

(51) Int. Cl.³ : **C 07 F 9/50**

(21) Anmeldenummer : **80104152.6**

(22) Anmeldetag : **16.07.80**

(54) **Verfahren zur Herstellung tertiärer Phosphine.**

(30) Priorität : **07.09.79 DE 2936210**

(43) Veröffentlichungstag der Anmeldung :
**08.04.81 Patentblatt 81/14**

(45) Bekanntmachung des Hinweises auf die Patenterteilung : **16.02.83 Patentblatt 83/07**

(84) Benannte Vertragsstaaten :
**BE CH DE FR GB IT LI NL**

(56) Entgegenhaltungen :
**DE C 899 040**

(73) Patentinhaber : **HOECHST AKTIENGESELLSCHAFT**
**Postfach 80 03 20**
**D-6230 Frankfurt/Main 80 (DE)**

(72) Erfinder : **Elsner, Georg, Dr.**
**Dr. Krauss-Strasse 5**
**D-5030 Hürth (DE)**
Erfinder : **Vollmer, Hartfrid, Dr.**
**Berliner Strasse 1**
**D-5042 Erftstadt (DE)**
Erfinder : **Reutel, Ernst**
**Auf dem Steinchen**
**D-5300 Bonn (DE)**

## Verfahren zur Herstellung tertiärer Phosphine

Die Erfindung betrifft ein Verfahren zur Herstellung tertiärer Phosphine der allgemeinen Formel $R_3P$, in der R einen geradkettigen Alkylrest mit zwei bis vier Kohlenstoffatomen darstellt, durch Umsetzung von Phosphorwasserstoff mit geradkettigen Monoolefinen, die 2 bis 4 C-Atome aufweisen. Diese Umsetzung findet üblicherweise unter Druck und bei erhöhter Temperatur in Gegenwart eines freie Radikale bildenden Mittels statt.

Aus der DE-PS 899 040 ist u. a. bereits bekannt, Phosphorwasserstoff und aliphatische Monoolefine in allen Mengenverhältnissen bei erhöhter Temperatur umzusetzen. So wird nach diesem bekannten Verfahren beispielsweise durch Umsetzung äquivalenter Mengen Phosphorwasserstoff und Buten- (1), in Anwesenheit eines Peroxids als Radikalbildner, Tributylphosphin mit einer Ausbeute von etwa 33 % nach einer 16-stündigen Reaktionszeit erhalten.

Ferner erhält man nach dieser bekannten Arbeitsweise durch Bestrahlen eines Gemisches von Phosphorwasserstoff und Isobuten in einem Glasgefäß mit ultraviolettem Licht bei 20 °C in 150 Minuten Triisobutylphosphin mit einer Ausbeute von etwa 13,5 %.

Nachteilig an diesem bekannten Verfahren ist die für ein technisches Verfahren ungenügende Ausbeute, bzw. die Entstehung von Stoffgemischen, deren Trennung weitere Probleme mit sich bringt.

Es ist weiterhin gemäß G. M. Burch et. al. (Journal of the Chemical Society, 1963, 1 083 ff.) bekannt, Phosphorwasserstoff und Ethylen im Molverhältnis 1 : 1 unter UV-Bestrahlung umzusetzen. Dabei entsteht zwar Triethylphosphin in guter Ausbeute (67 % bez. auf eingesetztes Olefin), jedoch ist die Raum-Zeit-Ausbeute von $8,9 \times 10^{-5}$ Mol/l · h für einen industriell verwertbaren Prozeß zu gering.

Ferner ist gemäß M. M. Rauhut et. al. (Journal of Organic Chemistry 1961, 26, 5 138 ff.) bekannt, beispielsweise Isobutylen mit $PH_3$ unter erhöhtem Druck, gegebenenfalls in einem Lösemittel, unter Einwirkung eines freie Radikale bildenden Mittels miteinander umzusetzen. Eine Umsetzung zu tertiären Phosphinen erfolgt dabei jedoch nur in geringerem Umfang, wobei außerdem nur cyclische, lang- oder verzweigtkettige Olefine eingesetzt werden.

Aufgabe der vorliegenden Erfindung ist es, die Nachteile der bekannten Arbeitsweise zu überwinden und ein Verfahren zur Herstellung von kurzkettigen tertiären Phosphinen zu entwickeln, welches einerseits für eine wirtschaftliche Herstellung von tertiären Phosphinen hinreichende Raum-Zeit-Ausbeute liefert ; andererseits aber bei hinreichend geringem Druck arbeitet, um die Kosten für den apparativen Aufwand nicht übermäßig ansteigen zu lassen.

Überraschenderweise wurde nun gefunden, daß sich diese Aufgabe lösen läßt, wenn man vor Beginn der Umsetzung des $PH_3$ mit den Monoolefinen eine Lösung des als Endprodukt gewünschten tertiären Phosphins in einem inerten Lösungsmittel vorlegt und die Umsetzung in dieser vorgelegten Lösung durchführt.

Vorzugsweise legt man dabei das tertiäre Phosphin in einer Menge von 50 bis 500 Mol-%, bezogen auf $PH_3$, vor.

Es empfiehlt sich, die Umsetzung bei Temperaturen von 50 bis 200 °C sowie bei Anfangsdrucken von 5-25 bar ablaufen zu lassen.

Der Vorteil der erfindungsgemäßen Arbeitsweise ist, daß die Anwendung hoher Drucke vermieden werden kann. Gleichzeitig kann durch Temperaturerhöhung der Zerfall des Radikalstarters so beschleunigt werden, daß wesentlich kürzere Reaktionszeiten erzielt werden können. Insbesondere kann dann durch portionsweise Zugabe des Radikalstarters die exotherme Reaktion so gesteuert werden, daß zu hohe Temperaturen und Drucke im Reaktor vermieden werden.

Die Erfindung wird durch folgende Beispiele verdeutlicht :

Beispiel 1 (Vergleichsbeispiel)

In einem 80 l Autoklaven werden $PH_3$ und Ethylen unter leichtem Überdruck eingeleitet. Die Menge wird so bemessen, daß unter Zugrundelegung der bekannten van der Waals-Konstanten ein Druck von 25 bar bei 120 °C nicht überschritten werden kann. Daraus errechnet sich eine Ansatzgröße von 15,5 mol $PH_3$ und 46,5 mol Ethylen entsprechend 0,527 kg $PH_3$ und 1,302 kg Ethylen.

Sodann wird durch Außenheizung eine Erwärmung auf ca. 90 °C herbeigeführt und mit dem Eindosieren der Starterlösung begonnen (1 l/h gesättigte Lösung von Azo-bis-isobutyronitril in Toluol). Durch die einsetzende exotherme Reaktion steigt die Temperatur auf etwa 110 °C, während der Druck, der zuerst auf 22 bar gestiegen war, langsam abfällt. Nach etwa 2 Stunden läßt die exotherme Reaktion nach, so daß die Reaktionstemperatur von etwa 90-100 °C durch Außenheizung aufrecht erhalten werden muß. Nach etwa 5-stündigem Eindosieren der Starterlösung ist der Druck im Reaktor auf etwa 3 bar abgefallen. Die gaschromatographische Untersuchung einer Probe ergibt, daß eine etwa 27 Gew.-% Lösung von Triethylphosphin in Toluol mit nur geringen Mengen von Mono- und Diethylphosphin entstanden ist. Die Ausbeute beträgt, bezogen auf $PH_3$, 90 Gew.-%, was einer Raum-Zeit-Ausbeute von $3,5 \times 10^{-2}$ Mol/l × h entspricht.

Beispiele 2-5 (Erfindungsgemäße Arbeitsweise)

Die im Beispiel 1 beschriebene Arbeitsweise wird noch 4-mal wiederholt, wobei das Reaktionsprodukt jeweils im Autoklaven verbleibt und für die jeweils folgende Umsetzung als Vorlage dient. Dabei zeigt sich, daß der Druck von Ansatz zu Ansatz niedriger wird, obwohl das im Reaktor verbleibende freie Volumen immer geringer wird. Gleichzeitig kann die benötigte Menge Starterlösung auf die Hälfte reduziert werden, ohne daß der Umsatz sich vermindert.

Es resultieren somit insgesamt 26,5 l einer ca. 39 Gew.-% Lösung von Triethylphosphin in Toluol, was einer Ausbeute von 95 Gew.-%, bezogen auf $PH_3$, entspricht.

Beispiel 6

Die nach Beispiel 2-5 erzeugte 39 %ige Lösung von Triethylphosphin in Toluol wird auf ca. – 20 °C im Autoklaven abgekühlt. Unter leichtem Überdruck werden 1,55 kg $PH_3$ und 3,9 kg Ethylen eingeleitet und sodann auf ca. 90 °C erhitzt. Dabei steigt der Druck auf etwa 20 bar an. Durch Einpumpen einer kleinen Menge der in Beispiel 1 beschriebenen Starterlösung wird die Reaktion gestartet. Die Temperatur steigt rasch auf ca. 120 °C, während der Druck schnell abfällt. Insgesamt werden im Verlauf von 2 Stunden 2 l Starterlösung eindosiert. Der Druck fällt gegen Ende auf 2 bar ab. Gaschromatographische Analyse der Produktlösung zeigt, daß eine rd. 47 Gew.-% Lösung von Triethylphosphin vorliegt. Dies entspricht einer Ausbeute von 95 Gew.-% und einer Raum-Zeit-Ausbeute von $2,9 \times 10^{-1}$ Mol/l × h.

Beispiel 7

Es wird analog der Arbeitsweise der Beispiele 2-5 eine ca. 50 %ige Lösung von Tri-n-propylphosphin in Toluol durch mehrfache Umsetzung von jeweils 0,52 kg $PH_3$ mit 2 kg Propen in Anwesenheit des freie Radikale bildenden Starters hergestellt, die als Vorlage dient. Sodann wird gemäß der Arbeitsweise des Beispiels 6 verfahren, d. h. es werden 1,5 kg Phosphorwasserstoff und 6 kg Propen zur Umsetzung gebracht. Beim Erhitzen auf die Reaktionstemperatur von 90 °C steigt der Druck nur auf etwa 20 bar. Die Reaktion wird wie in Beispiel 6 beschrieben durchgeführt. Nach etwa zwei Stunden ist der Druck auf 2 bar abgefallen. Die Analyse der Reaktionslösung ergibt, daß eine etwa 58 Gew.-%ige Lösung von Tri-n-propylphosphin in Toluol vorliegt. Dies entspricht einer Ausbeute von 93 Gew.-% und damit einer Raum-Zeit-Ausbeute von $2,9 \times 10^{-1}$ Mol/l × h.

Beispiel 8

Es wird analog der Arbeitsweise des Beispiels 7 durch Umsetzung von 0,52 kg $PH_3$ und 2,6 kg Buten-(1) eine etwa 50 %ige Lösung von Tri-n-butylphosphin in Toluol hergestellt. Sodann werden 16,2 kg Buten-(1) und 2,82 kg $PH_3$ unter leichtem Druck in die vorgelegte Lösung eingeleitet. Nach Aufheizen auf ca. 70 °C wird mit dem Eindosieren der Starterlösung begonnen. Durch die exotherme Reaktion steigt die Temperatur auf 106 °C und der Druck auf 23 bar an. Es werden insgesamt 3 l Starterlösung im Verlauf von 3 Stunden eindosiert. Der Druck ist danach auf 5 bar (bei 120 °C) abgefallen. Nach dem Abkühlen wird eine Probe entnommen und gaschromatographisch analysiert. Es zeigt sich, daß eine rd. 67 %ige Lösung von Tributylphosphin in Toluol vorliegt, entsprechend einer mehr als 95 %igen Umsetzung bez. auf Buten und $PH_3$. Dieses Beispiel zeigt gleichzeitig den großen Vorzug der erfindungsmäßigen Arbeitsweise gegenüber dem bekannten Stand der Technik. Die Raum-Zeit-Ausbeute beträgt $7,25 \times 10^{-1}$ Mol/l × h.

**Ansprüche**

1. Verfahren zur Herstellung tertiärer Phosphine der allgemeinen Formel $R_3P$, in der R einen geradkettigen Alkylrest mit 2 bis 4 C-Atomen darstellt, durch Umsetzung von Phosphorwasserstoff mit geradkettigen Monoolefinen, die 2 bis 4 C-Atome aufweisen, unter Druck und bei erhöhter Temperatur in Gegenwart eines freie Radikale bildenden Mittels, dadurch gekennzeichnet, daß man vor Beginn der Umsetzung eine Lösung des als Endprodukt gewünschten tertiären Phosphines in einem inerten Lösungsmittel vorlegt und die Umsetzung in dieser vorgelegten Lösung durchführt.

2. Verfahren nach Anspruch 1, dadurch gekennzeichnet, daß man das tertiäre Phosphin in einer Menge von 50 bis 500 Mol-%, bezogen auf $PH_3$, vorlegt.

3. Verfahren nach Anspruch 1 oder 2, dadurch gekennzeichnet, daß man die Umsetzung bei Temperaturen von 50 bis 200 °C durchführt.

4. Verfahren nach einem der Ansprüche 1 bis 3, dadurch gekennzeichnet, daß man die Umsetzung bei Anfangsdrucken von 5 bis 25 bar durchführt.

**Claims**

1. Process for making tertiary phosphines of the general formula $R_3P$, in which R stands for a linear alkyl radical having 2 to 4 carbon atoms, by reacting hydrogen phosphide with linear monoolefins having 2 to 4 carbon atoms under pressure and at elevated temperature in the presence of an agent yielding free radicals, which comprises : preparing, prior to starting the reaction, a solution of the tertiary phosphine desired to be produced as the final product in an inert solvent, and effecting the reaction in said solution.

2. Process as claimed in claim 1, wherein the tertiary phosphine is used in a proportion of 50 to 500 mol-%, based on $PH_3$.

3. Process as claimed in claim 1 or 2, wherein the reaction is effected at temperatures of 50 to 200 °C.

4. Process as claimed in any of claims 1 to 3, wherein the reaction is effected under initial pressures of 5 to 25 bars.

**Revendications**

1. Procédé de préparation de phosphines tertiaires de formule générale $R_3P$, dans laquelle R représente un radical alkyle à chaîne droite à 2-4 atomes de carbone, par réaction d'hydrogène phosphoré avec des monooléfines à chaîne droite présentant 2-4 atomes de carbone sous pression et à température élevée en présence d'un agent générateur de radicaux libres, caractérisé en ce que, avant le début de la réaction, on prépare une solution de la phosphine tertiaire recherchée comme produit fini dans un solvant inerte et on effectue la réaction dans cette solution.

2. Procédé selon la revendication 1, caractérisé en ce que l'on utilise la phosphine tertiaire en quantité de 50 à 500 moles-%, par rapport à $PH_3$.

3. Procédé selon la revendication 1 ou 2, caractérisé en ce que l'on effectue la réaction à des températures de 50 à 200 °C.

4. Procédé selon l'une des revendications 1 à 3, caractérisé en ce que l'on effectue la réaction sous des pressions initiales de 5 à 25 bars.